# EUROPÄISCHE PATENTANMELDUNG

(11) **EP 1 830 461 A1**
(43) Veröffentlichungstag der Anmeldung: **05.09.2007**
(21) Anmeldenummer: 06004160.5
(22) Anmeldetag: 01.03.2006
(51) Int. Cl.: H02P 6/00, H02P 1/46, B60R 22/20

(54) **Antriebseinheit, Verstelleinrichtung und Verfahren zum Antreiben einer Verstelleinrichtung**

(71) Anmelder: IMK AUTOMOTIVE GMBH, 09111 Chemnitz (DE); RKW Sachsen GmbH, 01067 Dresden (DE)
(72) Erfinder: Leidholdt, Wolfgang, Dr. sc. techn., 08294 Lössnitz (DE); Michel, Roland, Dr.-Ing., 09130 Chemnitz (DE)
(74) Vertreter: Grünecker, Kinkeldey, Stockmair & Schwanhäusser Anwaltssozietät

(57) **Zusammenfassung**

Die Erfindung betrifft eine Antriebseinheit für eine Verstelleinrichtung für ein verstellbares Element eines Fahrzeuges, mit einem Elektroantrieb, und ein zugehöriges Verfahren. Die Erfindung betrifft ferner eine Verstelleinrichtung für ein verstellbares Element eines Fahrzeuges, mit einer Antriebseinheit, einem Getriebe, einer mit dem verstellbaren Element koppelbaren Verstellmechanik und einem Lageerkennungssystem für die Verstellmechanik. Es ist die Aufgabe der vorliegenden Erfindung einen Antrieb für eine Verstelleinrichtung zur Verfügung zu stellen, welche gut in ein Fahrzeug einpassbar ist und dennoch langzeitstabil arbeitet. Diese Aufgabe wird durch eine Antriebseinheit und eine Verstelleinrichtung gelöst, bei welcher der Elektroantrieb ein Kleinantrieb mit einem permanent erregbaren, oberhalb einer Motornennleistung betriebenen Gleichstrommotor und einer elektronischen Regelung für den Gleichstrommotor ist. Die Aufgabe wird weiterhin durch ein Verfahren zum Antreiben einer Verstelleinrichtung für ein verstellbares Element eines Fahrzeugs, mit einem Elektroantrieb gelöst, wobei der Elektroantrieb ein Kleinantrieb mit einem permanent erregten Gleichstrommotor ist, der oberhalb einer Nennleistung eines Gleichstrommotors betrieben wird und der abgeschaltet wird, bevor eine kritische Erwärmungsgrenze des Gleichstrommotors erreicht wird.

## Beschreibung

Die vorliegende Erfindung betrifft eine Antriebseinheit für eine Verstelleinrichtung für ein verstellbares Element eines Fahrzeuges, mit einem Elektroantrieb, und ein zugehöriges Verfahren. Die Erfindung betrifft ferner eine Verstelleinrichtung für ein verstellbares Element eines Fahrzeuges, mit einer Antriebseinheit, einem Getriebe, einer mit dem verstellbaren Element koppelbaren Verstellmechanik und einem Lageerkennungssystem für die Verstellmechanik.

Antriebseinheiten und Verstelleinrichtungen der oben genannten Gattung werden beispielsweise bei einer Gurthöhenverstellung eines Fahrzeugs genutzt. Die bekannten Antriebe und Verstelleinrichtungen arbeiten mit permanent erregten Gleichstrommotoren, welche für eine Überlast- und Blockiersicherung der Motoren überdimensioniert und überwickelt sind. Durch die Überdimensionierung der Motoren kann eine Lastanfälligkeit der Motoren in Folge mangelnder Antriebssteife, welche sich in einem Jaulen äußern würde, ausgeschlossen werden. Die bekannten Antriebe und Verstelleinrichtungen besitzen jedoch dadurch den Nachteil, dass sie durch die großen Motoren groß und schwer sind.

Eine Verwendung kleinerer Motoren anstelle großer hochohmiger Motoren kam in den bekannten Vorrichtungen nicht in Betracht, da Kleinantriebe im Blockierfall bereits nach wenigen Sekunden durchbrennen und außerdem ein jaulendes Geräusch während des Betriebes bedingt durch ihre Lastanfälligkeit verursachen.

Es ist die Aufgabe der vorliegenden Erfindung, einen Antrieb für eine Verstelleinrichtung für ein verstellbares Element eines Fahrzeugs, ein Verfahren zum Verstellen eines verstellbaren Elementes sowie eine entsprechende Verstelleinrichtung zur Verfügung zu stellen, welche gut in ein Fahrzeug einpassbar ist und dennoch langzeitstabil arbeitet.

Die Aufgabe der vorliegenden Erfindung wird durch eine Antriebseinheit der oben genannten Gattung gelöst, bei welcher der Elektroantrieb ein Kleinantrieb mit einem permanent erregbaren, oberhalb einer Motornennleistung betriebenen Gleichstrommotor und einer elektronischen Regelung für den Gleichstrommotor ist.

Überraschenderweise kann bei Einsatz der erfindungsgemäßen Antriebseinheit trotz der vielen Bedenken und gegenteiligen Maßnahmen im Stand der Technik ein kleiner, schnell drehender Leistungsmotor verwendet werden, welcher zudem oberhalb seiner Motornennleistung betrieben wird, in welchem Bereich er typischerweise durchbrennen und daher nicht verwendet werden würde. Durch die elektronische Regelung ist es möglich, trotz des Einsatzes eines kleinen Motors eine geräuscharme und wohlklingende sowie überlastsichere Antriebseinheit für die Verstelleinrichtung für das verstellbare Element des Fahrzeuges zur Verfügung zu stellen. Durch den Einsatz des Kleinantriebs kann die Antriebseinheit klein und leicht gestaltet werden.

Gemäß einer vorteilhaften Ausführungsform der Erfindung umfasst die elektronische Regelung eine elektronische Drehzahlregelung für den Gleichstrommotor. Mit Hilfe der elektronischen Drehzahlregelung kann die Drehzahl des verwendeten kleinen Gleichstrommotors so eingestellt werden, dass ein Jaulen des Motors unter Last vermieden wird.

Vorzugsweise umfasst die elektronische Regelung eine elektronische Überlast- und Blockiersicherung für den Gleichstrommotor. Durch die intelligente Elektronik kann erreicht werden, dass die Antriebseinheit überlastsicher ist und intelligent nach einer Blockade wieder anläuft.

Es hat sich als besonders günstig erwiesen, wenn der Gleichstrommotor eine Betriebsleistung bis etwa 5 Watt, vorzugsweise von etwa 0,2 Watt bis etwa 1,5 Watt, besitzt. Motoren mit einem Leistungsbereich bis 5 Watt sind klein und leicht und daher besonders gut geeignet, um die Antriebseinheit platzsparend und mit geringem Gewicht im Fahrzeug vorzusehen. Motoren im Leistungsbereich von etwa 0,2 Watt bis etwa 1,5 Watt sind ganz besonders klein und leicht, so dass bei deren Einsatz die Antriebseinheit besonders kompakt und leicht gestaltet werden kann.

Gemäß einer Variante der Erfindung ist die elektronische Regelung für den Gleichstrommotor mit einem Prozessor gekoppelt. Mit Hilfe des Prozessors kann der kleine Motor im Betrieb überwacht werden, so dass eine intelligente Überlast- und Blockiersicherung für den Gleichstrommotor gewährleistet ist.

Entsprechend einem Beispiel der Erfindung bildet die Antriebseinheit einen Antrieb für mehrere verstellbare Elemente des Fahrzeuges aus. Somit kann die durch den Motor zur Verfügung gestellte Leistung von mehreren verstellbaren Elementen des Fahrzeugs genutzt werden.

Die erfindungsgemäße Aufgabe wird weiter durch eine Verstelleinrichtung der oben genannten Gattung gelöst, bei welcher die Antriebseinheit einen Kleinantrieb mit einem permanent erregbaren, oberhalb einer Motornennleistung betriebenen Gleichstrommotor und eine elektronische Regelung für den Gleichstrommotor aufweist.

Durch die Verwendung des Kleinantriebs kann die gesamte Verstelleinrichtung platzsparend und leicht gestattet werden. Es ist zudem möglich, dass die Antriebseinheit möglichst nahe an dem zu verstellenden Element vorgesehen wird. Die erfindungsgemäße Verstelleinrichtung ermöglicht es, trotz eines verringerten Gewichtes und geringeren Bauraumes für die Antriebseinheit eine geräuscharme und wohlklingende Verstellung des verstellbaren Elementes bei gleichzeitig überlastsicherer Funktion der Antriebseinheit zur Verfügung zu stellen.

Die elektronische Regelung der Antriebseinheit der Verstelleinrichtung kann eine elektronische Drehzahlregelung für den Gleichstrommotor und/oder eine elektronische Überlast- und Blockiersicherung für den Gleichstrommotor umfassen.

Der Gleichstrommotor der Antriebseinheit der Verstelleinrichtung kann eine Betriebsleistung bis etwa 5 Watt, vorzugsweise von etwa 0,2 Watt bis etwa 1,5 Watt, besitzen.

In einer günstigen Variante ist elektronische Regelung für den Gleichstrommotor der Antriebseinheit der Verstelleinrichtung mit einem Prozessor gekoppelt.

Es ist besonders günstig, wenn die Antriebseinheit der Verstelleinrichtung den Antrieb für mehrere verstellbare Elemente des Fahrzeuges ausbildet.

Gemäß einer vorteilhaften Weiterbildung der Erfindung weist das Lageerkennungssystem wenigstens einen Hallsensor auf, und an der Verstellmechanik ist wenigstens ein Magnet vorgesehen. Durch den Hallsensor kann eine Bewegung der Verstellmechanik erfasst werden, wodurch eine aktuelle Lage des zu verstellenden Elementes erfasst werden kann.

Gemäß einer Variante der Erfindung weist die Verstellmechanik eine Spindel auf, und das Lageerkennungssystem weist einen Zähler, einen A/D-Wandler und einen Speicher zum Zählen und Speichern von Umdrehungen der Spindel auf. Diese Ausbildung der Erfindung ist besonders gut geeignet, um die Lage des zu verstellenden Elementes anhand der Umdrehungszahl der Spindel zu ermitteln.

Gemäß einer anderen Variante der Erfindung weist das Lageerkennungssystem ein Potentiometer auf. Das Potentiometer ist ein stetig einstellbarer Spannungsteiler, dessen Widerstandswert in Abhängigkeit von der Position des zu verstellenden Elementes bzw. des zu Verstellsystems änderbar ist. Auf diese Weise kann die Position des zu verstellenden Elementes bzw. der Verstelleinrichtung ohne elektronischen Speicher oder Zähler ermittelt werden.

Es ist besonders günstig, wenn das Lageerkennungssystem mit einem Prozessor gekoppelt ist. Der Prozessor kann Werte, welche mit dem Lageerkennungssystem ermittelt werden, intelligent verarbeiten und daraufhin das Lageerkennungssystem intelligent steuern.

Vorzugsweise ist der Prozessor mit einem CAN-Bus des Fahrzeuges verbunden. Auf diese Weise kann eine jeweils aktuelle Lageinformation des zu verstellenden Elementes von dem Fahrzeug-CAN-Bus empfangen oder durch den CAN-Bus vorgegeben werden, wodurch die Steuerung des zu verstellenden Elementes von einer zentralen Stelle im Fahrzeug ausgeführt werden kann.

Entsprechend einer speziellen Ausführungsform der Erfindung ist das Getriebe der Verstelleinrichtung ein Planetengetriebe. Ein Planetengetriebe kann im Vergleich zu einem Stirnradgetriebe, welches grundsätzlich auch einsetzbar ist, klein gehalten werden, wodurch die gesamte Verstelleinrichtung klein und leicht gestaltet werden kann.

Es hat sich als besonders günstig erwiesen, ein schrägverzahntes Planetengetriebe als Getriebe der Verstelleinrichtung einzusetzen. Schrägverzahnte Planetengetriebe, beispielsweise Planetengetriebe mit schrägverzahnten Kunststoffrädern, haben den Vorteil, dass sie sehr leise arbeiten.

Vorzugsweise ist die Verstelleinrichtung eine Gurthöhenverstelleinrichtung. Damit können die Vorzüge der Verstelleinrichtung, wie ihre Kleinheit und ihr geringes Gewicht zur Gurthöhenverstellung genutzt werden, wobei die Gurthöhenverstelleinrichtung nahe an dem zu verstellenden Gurt platziert werden kann, ohne störend zu wirken.

Gemäß einer weiteren Variante der Erfindung ist die Verstelleinrichtung eine Innenspiegelverstelleinrichtung. Somit kann die kleine und leichte Verstelleinrichtung in der Nähe eines oder an einem Innenspiegel angebracht werden, ohne den optischen Eindruck eines Fahrzeuginterieurs zu verschlechtern.

Die Aufgabe der Erfindung wird weiterhin durch ein Verfahren zum Antreiben einer Verstelleinrichtung für ein verstellbares Element eines Fahrzeugs, mit einem Elektroantrieb gelöst, wobei der Elektroantrieb ein Kleinantrieb mit einem permanent erregten Gleichstrommotor ist, der oberhalb einer Nennleistung des Gleichstrommotors betrieben wird und der abgeschaltet wird, bevor eine kritische Erwärmungsgrenze des Gleichstrommotors erreicht wird.

Überraschenderweise kann mit dem erfindungsgemäßen Verfahren der Kleinantrieb in einem Leistungsbereich betrieben werden, in welchem er typischerweise durchbrennen würde, welcher Einsatz in der Praxis als ein Missbrauchsfall beschrieben wird. Dadurch, dass der Gleichstrommotor nur kurzzeitig, bevor er eine kritische Erwärmungsgrenze erreicht, mit einer hohen Leistung arbeitet, kann dem kleinen Motor eine gleiche Leistung wie von einem großen Motor abverlangt werden, ohne dass die Gefahr besteht, dass der Motor durchbrennt. Indem ein technisch beherrschbarer Bereich der Zeitfestigkeit des kleinen Gleichstrommotors in dem erfindungsgemäßen Verfahren für den Betrieb des Gleichstrommotors ausgenutzt wird, kann die gesamte Verstelleinrichtung klein und leicht gestaltet werden und damit wesentlich variabler als die bisherigen großen, schweren Verstelleinrichtungen im oder am Fahrzeug vorgesehen werden.

Es hat sich als besonders vorteilhaft erwiesen, wenn die kritische Erwärmungsgrenze eine Temperatur ist, welche der Gleichstrommotor noch schadlos erträgt, wobei Temperaturen oberhalb der kritischen Erwärmungsgrenze zu einem Motorschaden führen. Somit kann zumindest kurzzeitig oberhalb der technischen Nennspezifikation des Gleichstrommotors gearbeitet werden, ohne dass ein Schaden an dem Gleichstrommotor auftritt.

Gemäß einer besonders vorteilhaften Ausführungsform der Erfindung beträgt die kritische Erwärmungsgrenze etwa 110 °C bis etwa 130 °C. Unterhalb dieser Temperaturgrenze kann über kurze Betriebszeiten des Gleichstrommotors garantiert werden, dass dieser nicht durchbrennt.

In dem erfindungsgemäßen Verfahren ist es besonders sinnvoll, wenn eine Drehzahl des Gleichstrommotors elektronisch geregelt wird. Somit kann die Drehzahl des Gleichstrommotors auf intelligente Weise unterhalb der kritischen Erwärmungsgrenze des Gleichstrommotors eingestellt und nötigenfalls heruntergeregelt werden.

Entsprechend einer vorteilhaften Weiterbildung der Erfindung wird die Leistung des Gleichstrommotors vor Erreichen einer Überlast oder eines Blockierens des Gleichstrommotors elektronisch heruntergeregelt. Auf diese Weise kann durch Einsetzen einer intelligenten Schaltung die Stellleistung des Gleichstrommotors so eingestellt werden, dass er nicht durchbrennt.

In einem ganz besonders günstigen Beispiel der Erfindung wird mit dem Verfahren ein Gurt des Fahrzeugs höhenverstellt. Damit ermöglicht es das erfindungsgemäße Verfahren, dass der Gurt des Fahrzeugs mit Hilfe einer kleinen leichten Vorrichtung höhenverstellt wird, welche mit hoher Effektivität langzeitstabil arbeitet.

In einem anderen Beispiel der Erfindung wird mit dem Verfahren ein Innenspiegel des Fahrzeugs verstellt. Hierdurch können die Vorteile des erfindungsgemäßen Verfahrens genutzt werden, um mit Hilfe eines kleinen Motors, welcher flexibel an oder in der Nähe eines Innenspiegels des Fahrzeuges angebracht werden kann, den Innenspiegel zu verstellen.

Aufbau, Funktion und Vorteile der vorliegenden Erfindung werden im Folgenden anhand beispielhafter Ausführungsformen der Erfindung in Bezug auf die Figuren der Zeichnung erläutert. Dabei ist
- Figur 1: eine schematische Darstellung einer Ausführungsform der Verstelleinrichtung der vorliegenden Erfindung mit einer Ausführungsform der Antriebseinheit der vorliegenden Erfindung;
- Figur 2: eine schematische Darstellung der Verstelleinrichtung von Figur 1 mit einer anderen Ausführungsform der Antriebseinheit der vorliegenden Erfindung;
- Figur 3: eine Prinzipdarstellung der Funktionsweise der Antriebseinheit aus Figur 1;
- Figur 4: eine schematische Darstellung der Drehzahl über der Leistung, anhand welcher der Arbeitsbereich eines in der Antriebseinheit der vorliegenden Erfindung verwendeten Gleichstrommotors erläutert wird; und
- Figur 5: eine Vorder- und eine Hinteransicht eines Innenspiegels eines Fahrzeugs mit einer Verstelleinrichtung, einschließlich einer Antriebseinheit gemäß der vorliegenden Erfindung.

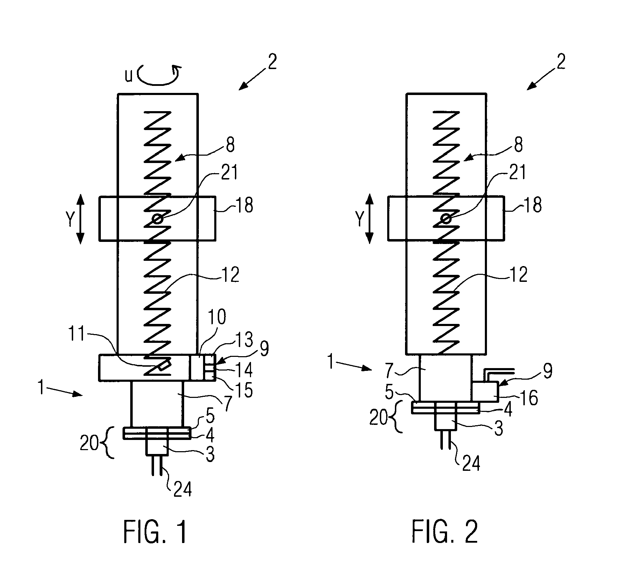

Figur 1 zeigt eine schematische Ansicht einer Verstelleinrichtung 2 mit einer Antriebseinheit 20 gemäß der vorliegenden Erfindung.

Die dargestellte Verstelleinrichtung 2 ist eine Gurthöhenverstelleinrichtung, welche zum Verstellen der Höhe einer mittels einer Befestigung 21 an der Verstelleinrichtung 2 angebrachten Gurtaufhängung 18 dient. Eine solche Gurtaufhängung 18 ist beispielsweise an einer Seite eines Sitzes des Fahrzeuges oder an der Fahrzeugkarosserie angebracht.

Die Fahrzeugverstelleinrichtung 2 weist in dem in Figur 1 gezeigten Beispiel eine Verstellmechanik 8 auf, welche eine Spindel 12 umfasst. Mit Hilfe der Spindel 12 kann die Gurtaufhängung 18 entsprechend der mit den Pfeilen Y angedeuteten Bewegungsrichtung nach oben bzw. nach unten verstellt werden.

Die Spindel 12 wird mit Hilfe eines Getriebes 7 betrieben, das mit der Verstellmechanik 8 gekoppelt ist. Das Getriebe 7 ist in dem gezeigten Beispiel ein schrägverzahntes Planetengetriebe, kann jedoch auch in anderen Ausführungsformen der Erfindung beispielsweise ein Stirnradgetriebe sein. Das in dem Beispiel von Figur 1 verwendete schrägverzahnte Planetengetriebe besitzt jedoch gegenüber Stimradgetrieben den Vorteil, dass es wesentlich geräuschärmer arbeitet.

Das Getriebe 7 wird von einem Gleichstrommotor 3 betrieben. Der Gleichstrommotor 3 ist im Verhältnis zu bisher im Stand der Technik für Verstelleinrichtungen für verstellbare Elemente an einem Fahrzeug verwendeten Motoren sehr klein und leicht. In dem in Figur 1 gezeigten Anwendungsfall wird beispielsweise ein Gleichstrommotor 3 mit einer Nennleistung von 0,2 Watt und einem Gewicht von 18 Gramm verwendet. Es hat sich jedoch gezeigt, dass allgemein Gleichstrommotoren 3 mit einer Nennleistung von bis etwa 5 Watt besonders gut für die Anwendung bei den in Figur 1 und 2 gezeigten Verstelleinrichtungen 2 geeignet sind, da sie klein und leicht sind. Besonders favorisiert sind Gleichstrommotoren 3 mit einer Nennleistung von etwa 0,2 bis etwa 1,5 Watt, welche besonders klein und leicht sind.

Der Gleichstrommotor 3 arbeitet in einem Bereich mit relativ hoher Leistung P bei einem vergleichsweise geringen Gewicht des Gleichstrommotors 3. Die geringe Masse des eingesetzten Gleichstrommotors 3 resultiert daraus, dass er eine geringe Anzahl von Windungen bei dickem Draht besitzt. Entsprechend des dadurch erreichten geringen Wicklungswiderstandes sind solche Gleichstrommotoren 3 empfindlich gegen Überlast.

Der Gleichstrommotor 3 wird oberhalb seiner Motornennleistung P_{N} betrieben. In diesem Bereich führt Leistungsmissbrauch typischerweise zur Zerstörung des Gleichstrommotors 3. Der Gleichstrommotor 3 ist jedoch mit einer elektronischen Regelung 4, 5 ausgestattet, welche eine Zerstörung des Gleichstrommotors 3 während des Betriebs bei solch hohen Leistungen verhindert.

Die elektronische Regelung umfasst eine elektronische Drehzahlregelung 4 und eine elektronische Überlast- und Blockiersicherung 5 für den Gleichstrommotor 3. Mit Hilfe der elektronischen Drehzahlregelung 4 kann ein Jaulen des Gleichstrommotors 3, welches typischerweise bei hoher Last in Folge mangelnder Antriebssteife des kleinen Motors 3 auftritt, verhindert werden.

Die Überlast- und Blockiersicherung 5 umfasst eine Stromkontrolle für den Gleichstrommotor 3. Der Gleichstrommotor 3, welcher bei Überlast im Blockierfall nach wenigen Sekunden durchbrennen würde, wird durch die Überlast- und Blockiersicherung 5 rechtzeitig abgeschaltet oder heruntergeregelt, so dass er überlastsicher arbeitet und nach einer Blockade wieder intelligent anläuft.

Der permanent erregte, oberhalb seiner Motornennleistung P_{N} betriebene Gleichstrommotor 3 und die elektronische Regelung 4, 5 für den Gleichstrommotor 3 bilden einen Kleinantrieb 20 für die Verstelleinrichtung 2 aus. Der Kleinantrieb 20 ist so klein und leicht, dass er in kompakter Form mit dem Getriebe 7 direkt an der Verstellmechanik 8 für das verstellbare Element 18 montiert werden kann. Mit Hilfe der erfindungsgemäßen Antriebseinheit 20 ist es daher nicht nötig, den Gleichstrommotor 3 an einer von dem zu verstellenden Element 18 weit entfernten Stelle im Fahrzeug vorzusehen.

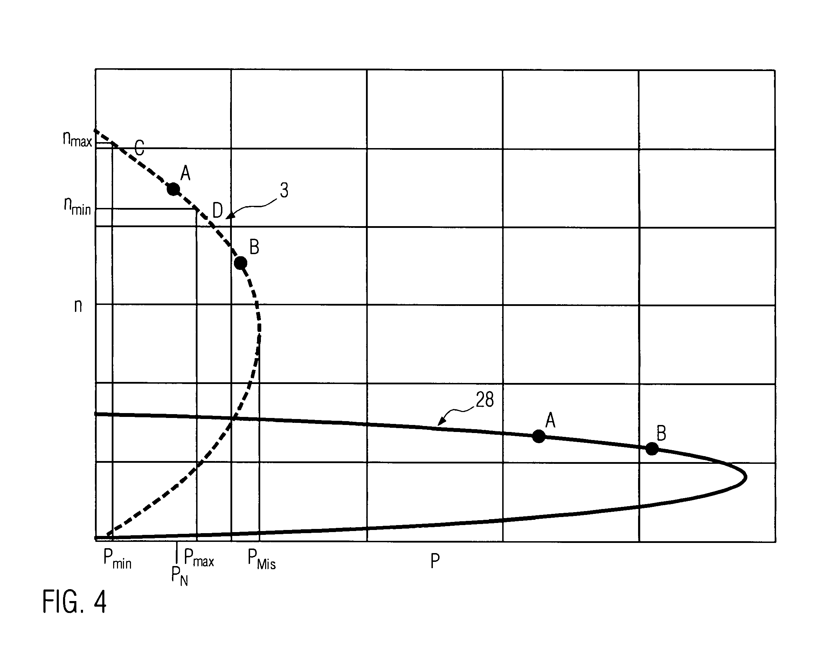

Die Arbeitsweise des Gleichstrommotors 3 ist detailliert im Hinblick auf Figur 4 beschrieben.

Wie in Figur 1 gezeigt, ist an der Spindel 12 ein Magnet 11 aufgebracht. Gegenüber dem Magneten 11 ist ein Hallsensor 10 vorgesehen. Durch den Hallsensor 10 werden in Verbindung mit dem an der Spindel 12 vorgesehenen Magneten 11 Bewegungen und damit Umdrehungen u der Spindel 12 erfasst. Auf diese Weise kann eine aktuelle Position des zu verstellenden Elementes 18 erfasst werden. Der Magnet 11 und der Hallsensor 10 sind Bestandteile eines Lageerkennungssystems 9, zu welchem außerdem ein Zähler 13 zum Zählen der Umdrehungen u der Spindel 12, ein A/D-Wandler 14 zum Umwandeln der erfassten Analogdaten in digitale Daten und ein Speicher 23 zum Speichern der Umdrehungen u der Spindel gehören. Der Speicher 23 ist ein Istwertspeicher.

Figur 2 zeigt eine andere Ausführungsform einer Verstelleinrichtung 2 gemäß der vorliegenden Erfindung. Die in Figur 2 dargestellte Verstelleinrichtung 2 besitzt ebenfalls eine Antriebseinheit 20 mit einem permanent erregbaren, oberhalb einer Motornennleistung P_{N} betriebenen Gleichstrommotor 3 und einer elektronischen Regelung 4, 5 für den Gleichstrommotor 3. Der Gleichstrommotor 3 treibt über das Getriebe 7 die Verstellmechanik 8 der Verstelleinrichtung 2 an. Im Vergleich zu Figur 1 wird jedoch anstelle eines magnetischen Lageerkennungssystems ein Lageerkennungssystem 9 mit einem Potentiometer 16 verwendet. Das Potentiometer 16 misst ebenfalls die Umdrehungen u der Spindel 12 der Verstellmechanik 8 und gibt die jeweils aktuelle Lage des verstellbaren Elementes 18 für die Lageregelung an einen externen Bordcomputer mittels analoger Werte zurück.

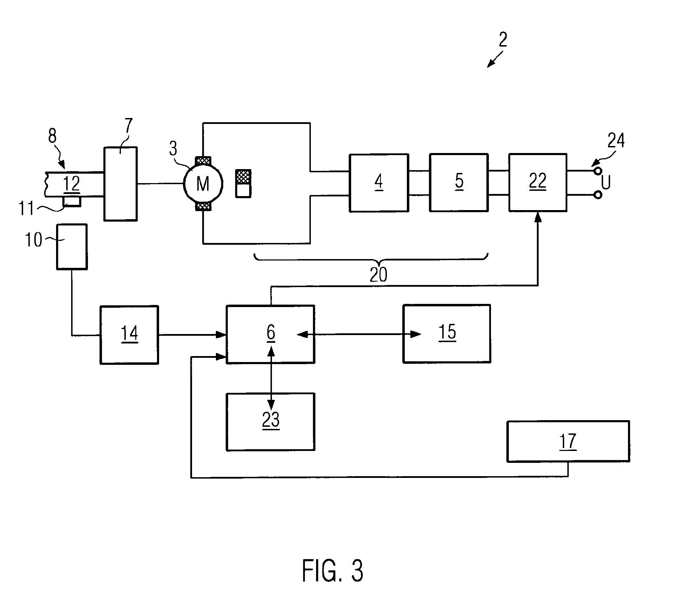

Figur 3 zeigt schematisch die Funktionsweise der in Figur 1 dargestellten Verstelleinrichtung 2.

An der Verstellmechanik 8 ist ein Magnet 11 angebracht, der einem Hallsensor 10 gegenüber ist. Bei jeder Umdrehung u der in der Verstellmechanik 8 vorgesehenen Spindel 12 wird der Magnet 11 mitbewegt und bei einer Position gegenüber dem Hallsensor 10 wird ein Signal bei dem Hallsensor 10 ausgelöst. Das von dem Hallsensor 10 erfasste Signal wird an einen Prozessor 6 übertragen. Der Prozessor 6 ist mit dem CAN-Bus 17 des Fahrzeugs gekoppelt und erhält über den CAN-Bus 17 einen Sollwert, welcher angibt, bis zu welcher Position die Verstelleinrichtung 2 das verstellbare Element 18 verstellen soll.

Der Prozessor 6 ist mit dem Istwertspeicher 23 gekoppelt, in welchem die jeweils aktuellen Umdrehungen u der Spindel 12 gespeichert sind.

Der Prozessor 6 ist in dem in Figur 3 gezeigten Beispiel zusätzlich mit einem Programmspeicher 15 gekoppelt, in welchem ein Programm zur Einstellung des zu verstellenden Elementes 18, beispielsweise in Abhängigkeit vom Nutzer des Fahrzeugs, gespeichert ist.

Die Spindel 12 wird durch das Getriebe 7 angetrieben, das in dem gezeigten Beispiel ein Planetengetriebe mit schräg verzahnten Kunststoffrädern ist.

Das Getriebe 7 wird von dem Gleichstrommotor 3 angetrieben, dem die elektronische Drehzahlregelung 4 und die elektronische Überlast- und Blockiersicherung 5 vorgeschaltet ist.

Zwischen einer Stromversorgung 24 und dem Kleinantrieb 20 ist in dem in Figur 3 gezeigten Beispiel ein Vorwärts-/Rückwärts-Treiber 22 für den Vorwärts- bzw. Rückwärtsbetrieb des Motors 3 und damit eine Aufwärts- bzw. Abwärtsbewegung Y der Spindel 12 vorgesehen.

Figur 4 zeigt ein Diagramm, in welchem schematisch die Drehzahl n von Gleichstrommotoren 3, 28 über der Leistung P von Gleichstrommotoren 3, 28 aufgetragen ist. Anhand von Figur 4 wird im Folgenden die Funktionsweise und der Arbeitsbereich in der Verstelleinrichtung 2 verwendeten Gleichstrommotors 3 im Vergleich zu bisher verwendeten, gutmütigen Motoren 28 näher erläutert.

In Figur 4 ist die Abhängigkeit der Drehzahl n des in der vorliegenden Erfindung verwendeten kleinen Gleichstrommotors 3 über der Leistung P gestrichelt dargestellt. Die Maximalleistung Pₘₐₓ des Gleichstrommotors 3 ist im Verhältnis zur Maximalleistung von großen, überdimensionierten, gutmütigen Motoren 28 relativ gering. Dadurch, dass der Gleichstrommotor 3 nicht überdimensioniert ist, kann er insgesamt klein und leicht gestaltet werden.

Im Bereich einer geringen Leistung P und einer hohen Drehzahl n, welcher in Figur 4 mit C gekennzeichnet ist, arbeitet der Gleichstrommotor 3 in einem thermisch stabilen Bereich bzw. im Bereich der Dauerfestigkeit, in welchem er problemlos über lange Zeit betrieben werden kann. Ab einem Punkt der Kennlinie des Gleichstrommotors 3, welcher in Figur 4 schematisch mit A angegeben ist, tritt ein Bereich D für den Gleichstrommotor 3 ein, in welchem er in der so genannten Zeitfestigkeit arbeitet. In diesem thermisch zeitfesten, von der Einschaltdauer abhängigen Bereich kann der Gleichstrommotor 3 im kalkulierbaren Rahmen unter technisch beherrschbaren Bedingungen betrieben werden. Ein längeres Betreiben in diesem Bereich oder stärkere Beanspruchungen des Gleichstrommotors 3 in diesem Bereich können jedoch zu Ausfallerscheinungen des Gleichstrommotors 3 führen.

Der Punkt A entspricht etwa einer von einem Hersteller angegebenen Nennleistung P_{N} ohne Angabe einer Einschaltdauer für den Gleichstrommotor 3. Von verschiedenen Herstellern werden auch Nennleistungen P_{N} im Zusammenhang mit einer Einschaltdauer angegeben, welche in dem in Figur 4 gezeigten Schema im Bereich D einzuordnen wären.

Ab einem mit B gekennzeichneten Punkt der Kennlinie des Gleichstrommotors 3 setzt eine Spontanzerstörung des Gleichstrommotors 3 ein. In diesem Überlastbereich ist im normalen Betrieb der Gleichstrommotor 3 schon nach kürzester Zeit defekt. Entsprechend wird eine Leistung oberhalb des Punktes B, bei welcher der Gleichstrommotor 3 nicht mehr betrieben werden darf, als Missbrauchsleistung Pₘᵢₛ bezeichnet.

Die in Figur 4 dargestellte durchgezogene Kennlinie stellt die Abhängigkeit der Drehzahl n von der Leistung P für einen großen, überwickelten und überdimensionierten Motor dar, welcher im Stand der Technik für Verstelleinrichtungen für verstellbare Elemente im Fahrzeug verwendet wird. Durch die Überdimensionierung kann der große Motor 28 bei wesentlich höherer Leistung P als der kleine Gleichstrommotor 3 betrieben werden. Auch der große Motor 28 hat Bereiche der Dauerfestigkeit und der Zeitfestigkeit, welche durch die Buchstaben A, B gekennzeichnet sind, welche jedoch bei wesentlich höheren Leistungen P als diejenigen Bereiche bei dem Gleichstrommotor 3 liegen. Entsprechend besteht bei dem großen, gutmütigen Motor 28 keine Gefahr, dass dieser durchbrennt. Andererseits hat der gutmütige Motor 28 einen hohen Platzbedarf und ein großes Gewicht.

Der kleine Gleichstrommotor 3 wird entsprechend der vorliegenden Erfindung kurzzeitig und außerhalb seiner technischen Nennspezifikation, das heißt oberhalb von P_{N} betrieben. Dieser Einsatz kann bereits als Missbrauch des Gleichstrommotors 3 bezeichnet werden. Der Gleichstrommotor 3 wird innerhalb und in technisch beherrschbaren, kurzzeitigen Bereichen der Zeitfestigkeit, das heißt im Bereich D von Figur 4, betrieben. Durch die elektronische Regelung für den Gleichstrommotor 3 kann dieser in einem kalkulierbaren Rahmen selbst außerhalb des Bereiches der Zeitfestigkeit, das heißt oberhalb des Punktes B in Figur 4 kurzzeitig betrieben werden, ohne dass dieser durchbrennt, zum Beispiel in der Zeit bis zum Ansprechen der Blockiersicherung.

Da der Gleichstrommotor 3 zum Beispiel bei Betreiben der Verstelleinrichtung 2 für eine Gurthöhenverstellung oder Innenspiegelverstellung nur kurzzeitig betrieben werden muss, kann er mit Hilfe der elektronische Regelung so eingestellt werden, dass er diese kurze Überlastperiode unbedenklich übersteht, ohne dass eine Überdimensionierung des Gleichstrommotors 3 erforderlich wäre.

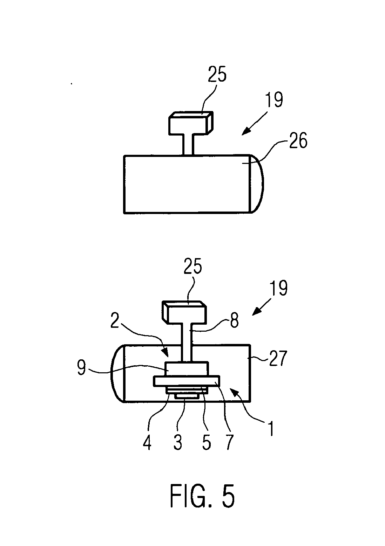

Figur 5 zeigt schematisch eine Vorder- und eine Rückansicht eines Innenspiegels 19.

Der Innenspiegel 19 ist mit Hilfe einer Aufhängung 25 am Fahrzeug befestigt. Über die Aufhängung 25 kann eine Stromversorgung für die Verstelleinrichtung 2 zur Verfügung gestellt werden. Die Verstelleinrichtung 2 kann jedoch auch eine interne Batterie aufweisen.

In Figur 5 ist der Innenspiegel 19 oben mit seiner Sichtseite 26 dargestellt. Im unteren Bereich von Figur 5 ist eine offene Rückseite 27 des Innenspiegels 19 zu sehen. Auf der Rückseite 27 ist die Verstelleinrichtung 2 untergebracht, welche in der Praxis mit einer in Figur 5 nicht dargestellten Abdeckung abgedeckt ist.

Die Verstelleinrichtung 2 wird mit einem Kleinantrieb 20 betrieben, der in dem gezeigten Beispiel den permanent erregten, oberhalb seiner Motornennleistung P_{N} betriebenen Gleichstrommotors 3, eine elektronische Regelung mit der elektronischen Drehzahlregelung 4 und der elektronischen Überlast- und Blockiersicherung 5 aufweist.

Der Gleichstrommotor 3 treibt das Getriebe 7 an, das wiederum eine Verstellmechanik 8 für den Innenspiegel 19 antreibt. Mit Hilfe der Verstellmechanik 8 kann der Innenspiegel 19 in mehreren Richtungen geschwenkt werden.

An der Verstelleinrichtung 2 ist ein Lageerkennungssystem 9 für die Verstellmechanik 8 vorgesehen, mit welcher die jeweilige Position des Innenspiegels 19 detektiert werden kann.

Wie in den Ausführungsbeispielen von Figur 1 und Figur 2 gezeigt, kann die elektronische Regelung 4, 5 für den Gleichstrommotor 3 der Verstelleinrichtung 2 an dem Innenspiegel 19 mit einem Prozessor 6 gekoppelt sein, welcher wiederum, wie in Figur 3 gezeigt, mit einem CAN-Bus 17, einem Istwertspeicher 23 und/oder einem Programmspeicher 15 für die Verstelleinrichtung 2 gekoppelt sein kann. Der Istwertspeicher 23 ist ein S-RAM. Der Programmspeicher 15 ist ein ROM.

Im Folgenden wird die Funktionsweise der Verstelleinrichtung 2 anhand des in Figur 3 gezeigten Beispiels erläutert.

Ein Nutzer eines Fahrzeugs steigt in das Fahrzeug ein und betätigt eine Taste für eine Gurthöhenverstellung. Die Taste ist mit dem internen Bordcomputer bzw. dem CAN-Bus 17 des Fahrzeugs verbunden. Über den CAN-Bus 17 wird eine gewünschte Gurthöhe oder eine gewünschte Gurthöhenverstellung an den Prozessor 6 übertragen. Der Prozessor 6 vergleicht den durch den CAN-Bus 17 vorgegebenen Sollwert mit einem Istwert in dem mit dem Prozessor 6 gekoppelten Istwertspeicher 23.

Der Prozessor 6 kann jedoch auch den Sollwert aus einem Programmspeicher 15 entnehmen, welcher nutzerspezifisch beim Einsteigen eines Nutzers in das Fahrzeug, beispielsweise durch einen nutzerspezifischen Fahrzeugschlüssel, betätigt werden kann.

Der Prozessor 6 ist mit der elektronischen Regelung für den Gleichstrommotor 3 verbunden. In Abhängigkeit von der durch den Prozessor 6 ermittelten Differenz zwischen Ist- und Sollwert gibt der Prozessor 6 ein Signal an den Vorwärts-/Rückwärts-Treiber 22 für den Gleichstrommotor 3 ab. Der Vorwärts-/Rückwärts-Treiber 22 steuert den Gleichstrommotor 3 so, dass er sich entweder vorwärts oder rückwärts dreht.

Der Gleichstrommotor 3 wird mit einer Spannung U über die Spannungsversorgung 24 so betrieben, dass seine Betriebsleistung oberhalb der in der Nennspezifikation des Gleichstrommotors 3 enthaltenen Nennleistung P_{N} während seines Betriebs ist. Die dem Gleichstrommotor 3 vorgeschaltete Überlast- und Blockiersicherung 5 verhindert, dass der Gleichstrommotor 3 im Überlastfall durchbrennt oder blockiert.

Der Gleichstrommotor 3 wird durch die Überlast- und Blockiersicherung 5 vor Erreichen einer kritischen Erwärmungsgrenze abgeschaltet oder heruntergeregelt. Die kritische Erwärmungsgrenze ist eine Temperatur, welche der Gleichstrommotor 3 noch schadlos erträgt, wobei Temperaturen oberhalb der kritischen Erwärmungsgrenze zu einem Schaden des Gleichstrommotors 3 führen. In dem gezeigten Einsatzfall liegt die kritische Erwärmungsgrenze bei etwa 110°C bis etwa 130°C Ankertemperatur. In Abhängigkeit von dem bei dem Gleichstrommotor 3 verwendeten Lack kann die kritische Erwärmungsgrenze jedoch auch höher liegen.

Mit Hilfe der dem Gleichstrommotor 3 vorgeschalteten Drehzahlregelung 4 wird die Drehzahl n des Gleichstrommotors 3 so eingestellt, dass ein Jaulen des Motors, auch bei Überlast, verhindert wird. Wird die Verstelleinrichtung 2 gemäß der vorliegenden Erfindung betätigt, hört der Nutzer des Fahrzeugs ein angenehmes, gleichmäßiges Geräusch.

Der Gleichstrommotor 3 treibt das schräg verzahnte Planetengetriebe 7 an, das geräuscharm arbeitet und die Spindel 12 der Verstellmechanik 8 drehend bewegt. Die Anzahl der Umdrehungen u der Spindel 12 wird magnetisch über den der Spindel 12 gegenüber befindlichen Hallsensor 10 und dem an der Spindel 12 selbst befestigten Magneten 11 ermittelt und an den Prozessor 6 übergeben. Der zwischen dem Hallsensor 10 und dem Prozessor 6 befindliche A/D-Wandler wandelt die analogen Signale des Hallsensors 10 in digitale Signale für den Prozessor 6 um.

Der Gleichstrommotor 3 wird auf diese Weise so lange betätigt, bis die gewünschte Gurthöhe eingestellt ist. Ein solcher Vorgang dauert typischerweise nur wenige Sekunden. In dieser Zeit kann der Gleichstrommotor 3 bei der verwendeten hohen Leistung P und der verwendeten elektronischen Regelung 4, 5 stabil arbeiten. Über den Hallsensor 10 ist zudem eine sichere Lageerkennung und Rückmeldung der Lage des zu verstellenden Elementes 18 an den Prozessor 6 langzeitstabil gewährleistet.

Obwohl die vorliegenden Erfindung beispielhaft am Beispiel einer Gurthöhenverstellung oder einer Innenspiegelverstellung beschrieben wurde, ist sie auch für jedes andere verstellbare Element an einem Fahrzeug, wie beispielsweise eine Schminkspiegelabdeckung, geeignet.

Auch wenn in den gezeigten Beispielen jeweils nur ein verstellbares Element 18 oder 19 mit Hilfe der Verstelleinrichtung 2 der vorliegenden Erfindung bzw. der Antriebseinheit für die Verstelleinrichtung 2 verstellt wurde, kann jeweils eine Antriebseinheit auch für mehrere verstellbare Elemente 18, 19 eingesetzt werden.

## Patentansprüche

1. Antriebseinheit (1) für eine Verstelleinrichtung (2) für ein verstellbares Element (18, 19) eines Fahrzeuges, mit einem Elektroantrieb, **dadurch gekennzeichnet, dass** der Elektroantrieb ein Kleinantrieb (20) mit einem permanent erregbaren, oberhalb einer Motornennleistung (P_{N}) betriebenen Gleichstrommotor (3) und einer elektronischen Regelung für den Gleichstrommotor (3) ist.

2. Antriebseinheit nach Anspruch 1, **dadurch gekennzeichnet, dass** die elektronische Regelung eine elektronische Drehzahlregelung (4) für den Gleichstrommotor (3) umfasst.

3. Antriebseinheit nach Anspruch 1 oder 2, **dadurch gekennzeichnet, dass** die elektronische Regelung eine elektronische Überlast- und Blockiersicherung (5) für den Gleichstrommotor (3) umfasst.

4. Antriebseinheit nach einem der vorhergehenden Ansprüche, **dadurch gekennzeichnet, dass** der Gleichstrommotor (3) eine Nennleistung bis etwa 5 Watt, vorzugsweise von etwa 0,2 Watt bis etwa 1,5 Watt, besitzt.

5. Antriebseinheit nach einem der vorhergehenden Ansprüche, **dadurch gekennzeichnet, dass** die elektronische Regelung für den Gleichstrommotor (3) mit einem Prozessor (6) gekoppelt ist.

6. Antriebseinheit nach einem der vorhergehenden Ansprüche, **dadurch gekennzeichnet, dass** die Antriebseinheit (1) einen Antrieb für mehrere verstellbare Elemente (18, 19) des Fahrzeuges ausbildet.

7. Verstelleinrichtung (2) für ein verstellbares Element (18, 19) eines Fahrzeuges, mit einer Antriebseinheit, einem Getriebe (7), einer mit dem verstellbaren Element (18, 19) koppelbaren Verstellmechanik (8) und einem Lageerkennungssystem (9) für die Verstellmechanik (8), **dadurch gekennzeichnet, dass** die Antriebseinheit (1) einen Kleinantrieb (20) mit einem permanent erregbaren, oberhalb einer Motornennleistung betriebenen Gleichstrommotor (3) und eine elektronische Regelung für den Gleichstrommotor (3) aufweist.

8. Verstelleinrichtung nach Anspruch 7, **dadurch gekennzeichnet, dass** das Lageerkennungssystem (9) wenigstens einen Hall-Sensor (10) aufweist, und an der Verstellmechanik (8) wenigstens ein Magnet (11) vorgesehen ist.

9. Verstelleinrichtung nach einem der Ansprüche 7 oder 8, **dadurch gekennzeichnet, dass** die Verstellmechanik (8) eine Spindel (12) aufweist, und das Lageerkennungssystem (9) einen Zähler (13), einen A/D-Wandler (14) und einen Speicher (23) zum Zählen und Speichern von Umdrehungen (u) der Spindel (12) aufweist.

10. Verstelleinrichtung nach einem der Ansprüche 7 bis 9, **dadurch gekennzeichnet, dass** das Lageerkennungssystem (9) ein Potentiometer (16) aufweist.

11. Verstelleinrichtung nach einem der Ansprüche 7 bis 10, **dadurch gekennzeichnet, dass** das Lageerkennungssystem (9) mit einem Prozessor (6) gekoppelt ist.

12. Verstelleinrichtung nach den Ansprüchen 5 und 11, **dadurch gekennzeichnet, dass** der Prozessor (6) mit einem CAN-Bus (17) des Fahrzeuges verbunden ist.

13. Verstelleinrichtung nach einem der Ansprüche 7 bis 12, **dadurch gekennzeichnet, dass** das Getriebe (7) ein Planetengetriebe ist.

14. Verstelleinrichtung nach Anspruch 13, **dadurch gekennzeichnet, dass** das Getriebe (7) ein schräg verzahntes Planetengetriebe ist.

15. Verstelleinrichtung nach einem der Ansprüche 7 bis 13, **dadurch gekennzeichnet, dass** die Verstelleinrichtung (2) eine Gurthöhenverstelleinrichtung ist.

16. Verstelleinrichtung nach einem der Ansprüche 7 bis 13, **dadurch gekennzeichnet, dass** die Verstelleinrichtung (2) eine Innenspiegelverstelleinrichtung ist.

17. Verfahren zum Antreiben einer Verstelleinrichtung (2) für ein verstellbares Element (18, 19) eines Fahrzeugs, mit einem Elektroantrieb, **dadurch gekennzeichnet, dass** der Elektroantrieb ein Kleinantrieb (20) mit einem permanent erregten Gleichstrommotor (3) ist, der oberhalb einer Nennleistung des Gleichstrommotors (3) betrieben wird und der abgeschaltet wird, bevor eine kritische Erwärmungsgrenze des Gleichstrommotors (3) erreicht ist.

18. Verfahren nach Anspruch 17, **dadurch gekennzeichnet, dass** die kritische Erwärmungsgrenze eine Temperatur ist, welche der Gleichstrommotor (3) noch schadlos erträgt, wobei Temperaturen oberhalb der kritischen Erwärmungsgrenze zu einem Motorschaden führen.

19. Verfahren nach einem der Ansprüche 17 oder 18, **dadurch gekennzeichnet, dass** die kritische Erwärmungsgrenze etwa 110°C bis etwa 130°C beträgt.

20. Verfahren nach einem der Ansprüche 17 bis 19, **dadurch gekennzeichnet, dass** eine Drehzahl (n) des Gleichstrommotors (3) elektronisch geregelt wird.

21. Verfahren nach einem der Ansprüche 17 bis 20, **dadurch gekennzeichnet, dass** eine Leistung (P) des Gleichstrommotors (3) vor Erreichen einer Überlast oder eines Blockierens des Gleichstrommotors (3) elektronisch heruntergeregelt wird.

22. Verfahren nach einem der Ansprüche 17 bis 21, **dadurch gekennzeichnet, dass** mit dem Verfahren ein Gurt (18) des Fahrzeugs höhenverstellt wird.

23. Verfahren nach einem der Ansprüche 17 bis 21, **dadurch gekennzeichnet, dass** mit dem Verfahren ein Innenspiegel (19) des Fahrzeugs verstellt wird.

## Geänderte Patentansprüche

### Geänderte Patentansprüche gemäss Regel 86(2) EPÜ.

**1.** Antriebseinheit (1) für eine Verstelleinrichtung (2) für ein verstellbares Element (18, 19) eines Fahrzeuges, mit einem Elektroantrieb, **dadurch gekennzeichnet, dass** der Elektroantrieb ein Kleinantrieb (20) mit einem permanent erregbaren und während seines Betriebs oberhalb einer Motornennleistung (P_{N}) betriebenen Gleichstrommotor (3) und einer elektronischen Regelung für den Gleichstrommotor (3) ist, wobei der Kleinantrieb (20) so klein und leicht ist, dass er mit einem Getriebe (7) direkt an einer Verstellmechanik (8) für das verstellbare Element (18, 19) montiert werden kann.

**2.** Antriebseinheit nach Anspruch 1, **dadurch gekennzeichnet, dass** die elektronische Regelung eine elektronische Drehzahlregelung (4) für den Gleichstrommotor (3) umfasst.

**3.** Antriebseinheit nach Anspruch 1 oder 2, **dadurch gekennzeichnet, dass** die elektronische Regelung eine elektronische Überlast- und Blockiersicherung (5) für den Gleichstrommotor (3) umfasst.

**4.** Antriebseinheit nach einem der vorhergehenden Ansprüche, **dadurch gekennzeichnet, dass** der Gleichstrommotor (3) eine Nennleistung bis etwa 5 Watt, vorzugsweise von etwa 0,2 Watt bis etwa 1,5 Watt, besitzt.

**5.** Antriebseinheit nach einem der vorhergehenden Ansprüche, **dadurch gekennzeichnet, dass** die elektronische Regelung für den Gleichstrommotor (3) mit einem Prozessor (6) gekoppelt ist.

**6.** Antriebseinheit nach einem der vorhergehenden Ansprüche, **dadurch gekennzeichnet, dass** die Antriebseinheit (1) einen Antrieb für mehrere verstellbare Elemente (18, 19) des Fahrzeuges ausbildet.

**7.** Verstelleinrichtung (2) für ein verstellbares Element (18, 19) eines Fahrzeuges, mit einer Antriebseinheit, einem Getriebe (7), einer mit dem verstellbaren Element (18, 19) koppelbaren Verstellmechanik (8) und einem Lageerkennungssystem (9) für die Verstellmechanik (8), **dadurch gekennzeichnet, dass** die Antriebseinheit (1) einen Kleinantrieb (20) mit einem permanent erregbaren und während seines Betriebs oberhalb einer Motornennleistung betriebenen Gleichstrommotor (3) und eine elektronische Regelung für den Gleichstrommotor (3) aufweist, wobei der Kleinantrieb (20) so klein und leicht ist, dass er mit dem Getriebe (7) direkt an der Verstellmechanik (8) für das verstellbare Element (18, 19) montiert werden kann.

**8.** Verstelleinrichtung nach Anspruch 7, **dadurch gekennzeichnet, dass** das Lageerkennungssystem (9) wenigstens einen Hall-Sensor (10) aufweist, und an der Verstellmechanik (8) wenigstens ein Magnet (11) vorgesehen ist.

**9.** Verstelleinrichtung nach einem der Ansprüche 7 oder 8, **dadurch gekennzeichnet, dass** die Verstellmechanik (8) eine Spindel (12) aufweist, und das Lageerkennungssystem (9) einen Zähler (13), einen A/D-Wandler (14) und einen Speicher (23) zum Zählen und Speichern von Umdrehungen (u) der Spindel (12) aufweist.

**10.** Verstelleinrichtung nach einem der Ansprüche 7 bis 9, **dadurch gekennzeichnet, dass** das Lageerkennungssystem (9) ein Potentiometer (16) aufweist.

**11.** Verstelleinrichtung nach einem der Ansprüche 7 bis 10, **dadurch gekennzeichnet, dass** das Lageerkennungssystem (9) mit einem Prozessor (6) gekoppelt ist.

**12.** Verstelleinrichtung nach den Ansprüchen 5 und 11, **dadurch gekennzeichnet, dass** der Prozessor (6) mit einem CAN-Bus (17) des Fahrzeuges verbunden ist.

**13.** Verstelleinrichtung nach einem der Ansprüche 7 bis 12, **dadurch gekennzeichnet, dass** das Getriebe (7) ein Planetengetriebe ist.

**14.** Verstelleinrichtung nach Anspruch 13, **dadurch gekennzeichnet, dass** das Getriebe (7) ein schräg verzahntes Planetengetriebe ist.

**15.** Verstelleinrichtung nach einem der Ansprüche 7 bis 13, **dadurch gekennzeichnet, dass** die Verstelleinrichtung (2) eine Gurthöhenverstelleinrichtung ist.

**16.** Verstelleinrichtung nach einem der Ansprüche 7 bis 13, **dadurch gekennzeichnet, dass** die Verstelleinrichtung (2) eine Innenspiegelverstelleinrichtung ist.

**17.** Verfahren zum Antreiben einer Verstelleinrichtung (2) für ein verstellbares Element (18, 19) eines Fahrzeugs, mit einem Elektroantrieb, **dadurch gekennzeichnet, dass** der Elektroantrieb ein Kleinantrieb (20) mit einem permanent erregten Gleichstrommotor (3) ist, der während seines Betriebs oberhalb einer Nennleistung des Gleichstrommotors (3) betrieben wird, bis eine gewünschte Position des verstellbaren Elementes (18, 19) eingestellt ist, und der abgeschaltet wird, bevor eine kritische Erwärmungsgrenze des Gleichstrommotors (3) erreicht ist.

**18.** Verfahren nach Anspruch 17, **dadurch gekennzeichnet, dass** die kritische Erwärmungsgrenze eine Temperatur ist, welche der Gleichstrommotor (3) noch schadlos erträgt, wobei Temperaturen oberhalb der kritischen Erwärmungsgrenze zu einem Motorschaden führen.

**19.** Verfahren nach einem der Ansprüche 17 oder 18, **dadurch gekennzeichnet, dass** die kritische Erwärmungsgrenze etwa 110°C bis etwa 130°C beträgt.

**20.** Verfahren nach einem der Ansprüche 17 bis 19, **dadurch gekennzeichnet, dass** eine Drehzahl (n) des Gleichstrommotors (3) elektronisch geregelt wird.

**21.** Verfahren nach einem der Ansprüche 17 bis 20, **dadurch gekennzeichnet, dass** eine Leistung (P) des Gleichstrommotors (3) vor Erreichen einer Überlast oder eines Blockierens des Gleichstrommotors (3) elektronisch heruntergeregelt wird.

**22.** Verfahren nach einem der Ansprüche 17 bis 21, **dadurch gekennzeichnet, dass** mit dem Verfahren ein Gurt (18) des Fahrzeugs höhenverstellt wird.

**23.** Verfahren nach einem der Ansprüche 17 bis 21, **dadurch gekennzeichnet, dass** mit dem Verfahren ein Innenspiegel (19) des Fahrzeugs verstellt wird.
